# EUROPEAN PATENT APPLICATION

(11) **EP 4 773 109 A1**
(43) Date of publication of application: **08.07.2026**
(21) Application number: 25150429.6
(22) Date of filing: 07.01.2025
(51) Int. Cl.: G07C 9/00

(54) **VEHICLE ACCESS SYSTEM AND OPERATING METHOD THEREOF**

(71) Applicant: NXP B.V., 5656 AG Eindhoven (NL)
(72) Inventor: Gu tin, Matja, 5656AG Eindhoven (NL); Saracevic, Omar, 5656 AG Eindhoven (NL)
(74) Representative: Krott, Michel

(57) **Abstract**

In accordance with a first aspect of the present disclosure, a vehicle access system for use in a vehicle is provided, the vehicle access system comprising: a detection unit configured to detect whether at least one external access device is present within a predefined area around the vehicle; and a controller operatively coupled to the detection unit, wherein the controller is configured to control a level of activity of the detection unit in dependence on a predetermined probability that the vehicle will be accessed within predefined time slots. In accordance with further aspects of the present disclosure, a corresponding operating method is conceived, and a computer program for carrying out said method is provided.

## Description

### TECHNICAL FIELD

The present disclosure relates to a vehicle access system for use in a vehicle. Furthermore, the present disclosure relates to a corresponding method of operating a vehicle access system for use in a vehicle, and to a corresponding computer program.

### BACKGROUND

Vehicle access systems allow users of a vehicle to access said vehicle in a convenient manner. However, in order to enable a convenient access to the vehicle, a vehicle access system should typically be turned on all the time, resulting in an increased power consumption.

### SUMMARY

In accordance with a first aspect of the present disclosure, a vehicle access system for use in a vehicle is provided, the vehicle access system comprising: a detection unit configured to detect whether at least one external access device is present within a predefined area around the vehicle; and a controller operatively coupled to the detection unit, wherein the controller is configured to control a level of activity of the detection unit in dependence on a predetermined probability that the vehicle will be accessed within predefined time slots.

In one or more embodiments, controlling the level of activity of the detection unit includes, if said predetermined probability is below a predefined threshold, causing the detection unit to enter into a low-power operating state or deactivating at least a part of the detection unit.

In one or more embodiments, the detection unit comprises at least one communication node, and causing the detection unit to enter into a low-power operating state comprises reducing a scanning frequency of the communication node, an advertising frequency of the communication node, or a ranging frequency of the communication node.

In one or more embodiments, the detection unit comprises a plurality of communication nodes, and deactivating at least a part of the detection unit comprises deactivating a subset of said communication nodes.

In one or more embodiments, the communication nodes include at least one of the group of: Bluetooth low energy (BLE) communication nodes; ultra-wideband (UWB) communication nodes; and near field communication (NFC) communication nodes.

In one or more embodiments, the controller is configured to predetermine the probability by executing an algorithm that takes one or more of the following parameters as input: a pattern of use of the vehicle; a current date and time; a geographical location of the vehicle; a calendar of one or more users of the vehicle; a configurable setting stored in the vehicle or in the access device; a location of the access device; a movement pattern of one or more users of the vehicle.

In one or more embodiments, the algorithm is a machine learning algorithm.

In one or more embodiments, the machine learning algorithm is based on a Bayesian network, a Gaussian mixture model, a hidden Markov model, a recurrent neural network, or a temporal convolutional network.

In one or more embodiments, the controller is further configured to be prevented, by an override function initiated by a user, from controlling the level of activity.

In one or more embodiments, the access device is a mobile device carried by a user of the vehicle.

In one or more embodiments, a vehicle comprises a vehicle access system of the kind set forth.

In accordance with a second aspect of the present disclosure, a method of operating a vehicle access system for use in a vehicle is conceived, the method comprising: detecting, by a detection unit included in the vehicle access system, whether at least one external access device is present within a predefined area around the vehicle; and controlling, by a controller included in the vehicle access system, a level of activity of the detection unit in dependence on a predetermined probability that the vehicle will be accessed within predefined time slots.

In one or more embodiments, controlling the level of activity of the detection unit includes, if said predetermined probability is below a predefined threshold, causing the detection unit to enter into a low-power operating state or deactivating at least a part of the detection unit.

In accordance with a third aspect of the present disclosure, a computer program is provided, comprising executable instructions which, when executed by a vehicle access system of the kind set forth, cause said vehicle access system to carry out a method of the kind set forth.

### DESCRIPTION OF DRAWINGS

Embodiments will be described in more detail with reference to the appended drawings.
Fig. 1 shows an illustrative embodiment of a vehicle access system.
Fig. 2 shows an illustrative embodiment of a method of operating a vehicle access system.
Fig. 3 shows a process for determining a probability of access of a vehicle.
Fig. 4 shows a graph showing a probability of access versus time.

### DESCRIPTION OF EMBODIMENTS

As mentioned above, vehicle access systems allow users of a vehicle to access said vehicle in a convenient manner. However, in order to enable a convenient access to the vehicle, a vehicle access system should typically be turned on all the time, resulting in an increased power consumption. This increased power consumption is a constraint for parked vehicles due to limited energy budgets, especially in case of a longer duration of parking, for example when the vehicle is left at an airport or when the vehicle is being shipped. Additionally, Bluetooth low energy (BLE) scanning, BLE advertising and ultra-wideband (UWB) ranging should only be enabled when the vehicle is truly being accessed and not, for instance, when someone is walking by the vehicle without having the intention to access said vehicle. The latter may happen, for example, when a user has a car parked in a garage and goes with their phone to the garage to retrieve an item, but not to access the car.

Now discussed are a vehicle access system, a corresponding method of operating a vehicle access system, and a corresponding computer program, which facilitate achieving a reduced power consumption, while maintaining an acceptable level of user convenience.

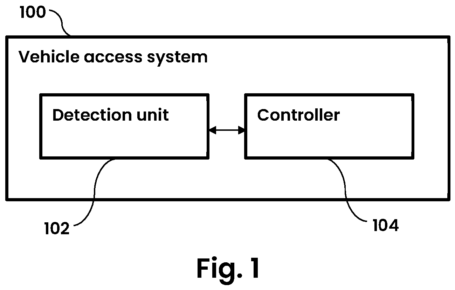

**Fig. 1** shows an illustrative embodiment of a vehicle access system 100 for use in a vehicle. The vehicle access system 100 comprises a detection unit 102 and a controller 104 which are operatively coupled to each other. The detection unit 102 is configured to detect whether at least one external access device is present within a predefined area around the vehicle (not shown). Furthermore, the controller 104 is configured to control a level of activity of the detection unit 102 in dependence on a predetermined probability that the vehicle will be accessed within predefined time slots. By controlling the level of activity of the detection unit 102 in dependence on said predetermined probability, the power consumption of the vehicle access system may be reduced, while the level of user convenience may remain at an acceptable level. Both the detection unit 102 and the controller 104 may comprise a processing unit for processing or carrying out at least a part of the detection function and the control function, respectively.

In one or more embodiments, controlling the level of activity of the detection unit includes, if said predetermined probability is below a predefined threshold, causing the detection unit to enter into a low-power operating state or deactivating at least a part of the detection unit. In this way, the power consumption of the vehicle access system may easily be reduced when appropriate. In one or more embodiments, the detection unit comprises at least one communication node, and causing the detection unit to enter into a low-power operating state comprises reducing a scanning frequency of the communication node, an advertising frequency of the communication node, or a ranging frequency of the communication node. This further facilitates reducing the power consumption when appropriate. Furthermore, in one or more embodiments, the detection unit comprises a plurality of communication nodes, and deactivating at least a part of the detection unit comprises deactivating a subset of said communication nodes. This further facilitates reducing the power consumption when appropriate. In a practical implementation, the communication nodes include at least one of the group of: Bluetooth low energy (BLE) communication nodes, ultra-wideband (UWB) communication nodes, and near field communication (NFC) communication nodes. The skilled person will appreciate that the vehicle access system may include, alternatively or in addition, communication nodes of another type.

In one or more embodiments, the controller is configured to predetermine the probability by executing an algorithm that takes one or more of the following parameters as input: a pattern of use of the vehicle, a current date and time, a geographical location of the vehicle, a calendar of one or more users of the vehicle, a configurable setting stored in the vehicle or in the access device, a location of the access device, and a movement pattern of one or more users of the vehicle. This facilitates predetermining the probability that the vehicle will be accessed within the predefined time slots. More specifically, the predetermined probability may also be indicative of the likelihood that the vehicle will be accessed by more than one user. For example, the pattern of use of the vehicle may reflect the usage patterns of multiple users (e.g., of a single household). Similarly, the calendars of multiple users may be merged into a single calendar which is used as an input for computing said probability, or the movement patterns of multiple users may be merged into a single movement pattern which is used as an input for computing said probability. Finally, the configurable settings stored in multiple access devices, owned by different users, may be used as an input for computing said probability. In one or more embodiments, the algorithm is a machine learning algorithm. Such an algorithm is particularly suitable for predetermining said probability, and facilitates increasing the accuracy with which the probability is predetermined. In a practical implementation, the machine learning algorithm is based on a Bayesian network, a Gaussian mixture model, a hidden Markov model, a recurrent neural network, or a temporal convolutional network.

In one or more embodiments, the controller is further configured to be prevented, by an override function initiated by a user, from controlling the level of activity. In this way, a user may easily disable or enable the power reduction functionality, if desired and deemed appropriate. For example, the user may disable the power reduction functionality if they know that it is not needed. In another example, the user may enable power reduction functionality if the vehicle access system would not enable it, but they know that it should be enabled. More specifically, the user may enforce the power reduction functionality in scenarios in which the vehicle access system would determine that the vehicle will probably be accessed. In a practical implementation, the access device is a mobile device carried by a user of the vehicle. For example, the access device may be a smart phone, a smart watch or a smart key fob.

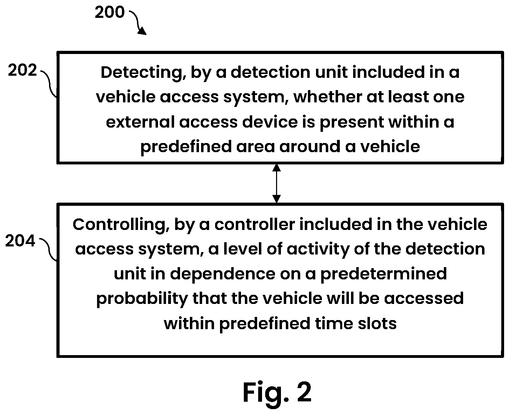

**Fig. 2** shows an illustrative embodiment of a method 200 of operating a vehicle access system. The method 200 comprises the following steps. At 202, a detection unit included in a vehicle access system detects whether at least one external access device is present within a predefined area around a vehicle. Furthermore, at 204, a controller included in the vehicle access system controls a level of activity of the detection unit in dependence on a predetermined probability that the vehicle will be accessed within predefined time slots. As mentioned above with reference to the corresponding vehicle access system shown in Fig. 1, by controlling the level of activity of the detection unit in dependence on said predetermined probability, the power consumption of the vehicle access system may be reduced, while the level of user convenience may remain at an acceptable level.

In accordance with the present disclosure, a learning algorithm may be introduced to a vehicle access system to lower the energy consumption of a parked vehicle during the times the vehicle is unlikely to be accessed, for example by reducing how often the vehicle scans or advertises. The probability of access may be estimated on the basis of previous usage patterns, a global positioning system (GPS) location, a date and time, and personal calendar entries, for example. Furthermore, trajectories of approach towards the vehicle during a specific schedule may also be used to determine which anchors (i.e., communication nodes) may be turned off because they are unlikely to be used.

More specifically, a car access system might lower its power consumption by keeping some of its devices powered off or in a deep power-down mode for longer periods, advertise less frequently, or scan less frequently, in order to spare energy when it is not likely to be used. This likelihood (i.e., probability) may be estimated and continuously learned and improved based on, among others, vehicle usage patterns (e.g., likely to be accessed in the morning to drive to work but not in the middle of the night), the current date and time, the GPS location (e.g., the vehicle is parked at the airport, thus likely to stay there for days without being used), pre-shared personal calendar entries (e.g., appointment at a different location probably requires driving there), and other sensors and data indicating the access need of the vehicle.

A typical smart access system in a vehicle includes multiple BLE nodes, multiple UWB nodes, multiple NFC nodes, controller area network (CAN) or Ethernet connectivity via an in-vehicle network, a secure element (SE), and a central access electronic control unit (ECU) coordinating the aforementioned nodes. The skilled person will appreciate that the ECU might be the same as the body control module (BCM). Furthermore, a vehicle access system typically interacts with a mobile device, i.e. a communication counterpart that might be a smart phone, a smart watch or a smart key fob. In such a system, the presently disclosed algorithm may be fully implemented as a computer program, i.e., as a software applied to the vehicle access system. In other words, no hardware modification may be needed. Alternatively, a combination of hardware and software may be used.

A vehicle access system implemented on the side of a vehicle typically contains multiple devices that are periodically checking for the presence of an external access device (i.e., a mobile device), for example by performing BLE scans, i.e., by listening if any BLE advertising devices are nearby. Furthermore, outdoor NFC transceivers on the vehicle may also constantly be polling or checking for the presence of an access device in their radio field. As this is done continuously over the whole day by all access anchors within a vehicle, the vehicle consumes a considerable amount of energy over time. This energy consumption is even more critical on a resource-constrained access device, for example on a smart watch or a smart key fob. These devices are performing BLE scans and if any BLE advertising devices present on the vehicle are nearby, then the UWB ranging functionally is usually activated, which consumes additional energy. Thus, overall, a significant amount of power is consumed both by the vehicle access system integrated into the vehicle, and by the external access device that interacts with this system.

In accordance with the present disclosure, a central controller, such as an access ECU that controls the UWB, BLE, NFC communication nodes (i.e., anchors), may decide whether their scanning or advertising is needed or not based on a probabilistic algorithm, thereby facilitating reducing the power consumption of both the vehicle access system and the access device. More specifically, based on the vehicle model, vehicle user and configuration of the expected access times, an initial schedule for the activation of the vehicle access system may be created. By tracking vehicle user access data over a time span of days, weeks and months and additional inputs such as geographical position and calendar entries, the model may be adapted to limit the scanning time and also the time point when the scanning occurs. Furthermore, when a person is in the vicinity of the vehicle, but unlikely to use the vehicle according to the learned usage patterns (e.g., when mowing the lawn or retrieving items from the garage), the vehicle access system and also the external access device may analyze the trajectory movement patterns of the user and not turn on the vehicle access system fully if the vehicle is not approached. These trajectory movement patterns when not approaching the vehicle (but in the vicinity of the vehicle) differ from the trajectory movement patterns when approaching the vehicle to access the vehicle. These subtle differences may be learned by computing different common distance metrics such as longest common subsequence or dynamic time warping, between common access trajectories and anomalous trajectories, when the user is not trying to enter the vehicle.

In order to learn when a vehicle will be accessed, a number of different algorithms may be implemented. A relatively simple implementation may be to have a histogram of time slots (i.e., time bins), each with a duration of 10 or 15 minutes throughout the entire day or week, where each slot counts the amount of accesses of the vehicle during that time slot. The amount of accesses might be initially guessed, then improved by measurements of the past, refined in a feedback loop, and finally used for predictions of future days or weeks. More complex methods may include probabilistic models, such as Bayesian networks, Gaussian mixture models and hidden Markov models. Other examples of machine learning models may be in the domain of forecasting models which are able to predict time-relevant events given a set of multimodal inputs. These may include recurrent neural networks (RNNs) or temporal convolutional networks (TCNs).

More specifically, the inputs for the algorithm to compute the most likely time slots within which the vehicle will be accessed may be one or more of the following parameters. A first parameter may be a learned usage pattern of the vehicle. For example, the vehicle may be used every morning at the same time, but only from Monday up to and included Friday, while the vehicle is accessed differently on Saturday and Sunday. In addition, the geographical location may also be learned, in order to determine whether the user is at home, at their workplace, or at a weekly place for leisure (e.g., a swimming pool). Furthermore, calendar entries of the user may be used for an initial guess of the user's schedule, and to learn about sporadic appointments. In addition, a configurable setting in the vehicle, or in an app of the access device, may be used to indicate when the user is most commonly accessing the vehicle or when the user is away for a while and the vehicle is parked for a longer period of time, for example. Furthermore, the position of the access device may be used to ping the cloud, which pings the vehicle to start waking up. The latter may be implemented by using the knowledge of where the vehicle was parked and then, if the distance between the access device and the vehicle drops below a certain threshold, the vehicle may receive a notification to start scanning in the near future.

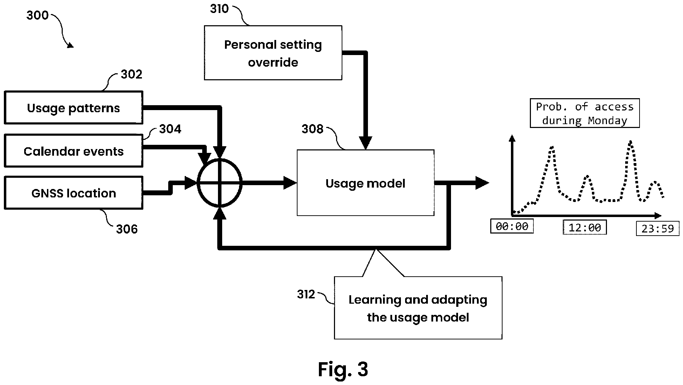

**Fig. 3** shows a process 300 for determining a probability of access of a vehicle. The process 300 is based on a usage model 308 that outputs the probability of access of the vehicle within time slots distributed over a particular day of the week (for example, Monday). Different parameters may be used as inputs to build this usage model 308. For example, such inputs may include usage patterns 302 of the vehicle, calendar events 304 of the vehicle user, and a global navigation satellite system (GNSS) location 306 of the vehicle. The usage model 308 may be a machine learning model that continuously learns and adapts 312 itself. A personal setting 310 may be used to override the predictions of the usage model 308. It is noted that the process 300 is a non-limiting example of a process for determining a probability of access of a vehicle.

More specifically, in order to build and update the usage model 308, every user access may be logged, including information that identifies the user, date, time, geographical location of the vehicle (GNSS), the trajectory of approach of the user, and which vehicle doors were used. Then, the usage model 308 may be trained with the received data and be validated in the field. Since the usage model 308 may be a machine learning model, it may re-train itself and the new input data may be validated. The usage model 308 outputs the probability of access events and the probability of each anchor to be used during a specific day. For example, if the usage model 308 expects no activity at 13:30 on Fridays, but the user changes working shifts and starts to use the vehicle at that time, the model 308 should adapt to this new pattern and increase the projected probability of an access in that time slot. In another example, if the vehicle is parked every day at the same position in a garage, the shape of the garage might affect the approach trajectory of the owner. The model 308 might expect some anchors to be very useful (because they are in a line-of-sight) when the vehicle is in such position, but others not (e.g., because they are facing a wall), so the latter may be deactivated. In addition, the user may provide custom input values when they expect to unlock/use vehicle (e.g., during workdays between 08:00-09:00 and 17:00-18:00). These may be used as an initial educated guess for the inference and to speed up the model training. The user may also provide some override setting, for instance when knowingly leaving the vehicle for a while, such as when flying away for a trip with the vehicle left in the airport parking lot. During this time the vehicle might use power-saving settings which are even stricter than usual. For example, the user might configure the vehicle in such a way that it fully deactivates BLE and leaves only NFC scanning, or that it disables BLE, UWB, and NFC and waits for the door handle to be touched first to turn them on (reducing thus a passive access system to an active one). A base algorithm or model may be computed based on the vehicle model, the profile of the driver and the family utilizing the vehicle. During the initial usage patterns of the vehicle (which can range from a week to two months), the model 308 may be fine-tuned with data collected each time a vehicle is entered, which allows for creating some possible deviations.

In order to maximize the energy saving, the model 308 may be deployed continuously to immediately apply the newly learned habits. Furthermore, the prediction function may be disabled if abnormal activity has been collected (e.g., traveling for vacation or a business trip, abnormal entering of a vehicle during a holiday). It is noted that a certain number of abnormal activities can be expected due to irregular patterns such as emergencies. However, irregular patterns due to holidays, longer trips and vacation may be detectable using the geographical position of the vehicle (e.g., near an airport) and using calendar entries. If the vehicle is utilized by another person as determined by the keys being exchanged or a new phone being authorized, or if too many abnormal activities occur, then the model 308 may be able to account for these anomalies, and the model 308 may retrain itself using a certain set of acquired data which is stored for such cases. Alternatively, the model 308 could be skipped (overridden) in such scenarios and the vehicle may fall back to an unoptimized constant scanning.

It is noted that, if the access device is a smart phone, then it might track its GNSS position to see when it is approaching the parked vehicle, e.g., after the user has exited a building and has started to walk towards the vehicle. In that case, the smart phone might also notify the vehicle via an internet connection when it is approaching the parked vehicle, to increase the polling frequency of the anchors. Optionally, the usage patterns 302 and statistics may be sent to the cloud for further evaluation and optimization of future base models based on the geographical positions of the vehicle during its use, the vehicle model or a description of the vehicle user. It is noted that, if the vehicle access system fully powers down, it becomes unreachable, which may become critical in case of emergencies. To avoid this, the vehicle access system may enter into a very slow rate of scanning and advertising (e.g., once every few seconds) rather than fully stopping for large periods of time (e.g., in the order of minutes). Furthermore, regardless of the power settings, the vehicle may be configured to fully wake the entire vehicle access system and set it to unconstrained activity for maximized responsiveness in case any door handle is touched or pulled. Such behavior provides a solution for a quick access in case of emergencies even in cases of a fully powereddown vehicle access system or when the mobile device was not detected in time due to any low-power state or environmental condition.

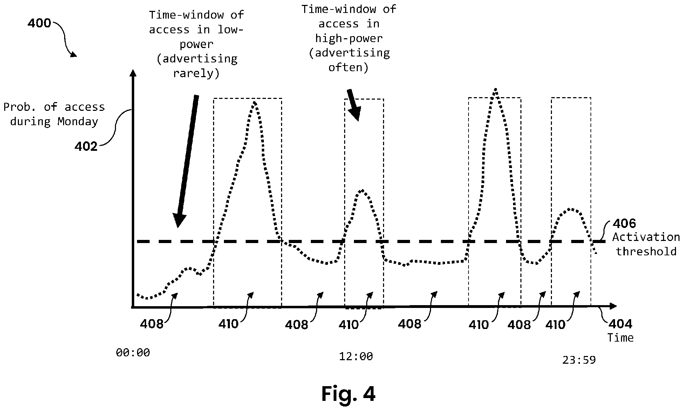

**Fig. 4** shows a graph 400 showing a probability of access versus time. In particular, the graph 400 shows, on the vertical axis, the probability of access 402 to a vehicle on Monday, and, on the horizontal axis, the time 404 of the day. The probability of access 402 has been determined for a plurality of time slots during the day, illustrated by the dots of which the probability curve is composed (i.e., each dot representing a specific time slot). In certain time windows 408, including a plurality of such time slots, the probability 402 remains below a predefined activation threshold 406. In these time windows 408, the vehicle access system is caused to operate in a low-power mode, in which it advertises rarely. In other time windows 410, also including a plurality of time slots, the probability 402 exceeds the activation threshold 406. In those time windows 410, the vehicle access system is caused to operate in a high-power mode, in which it advertises often.

Now described is a non-limiting example of an implementation and a machine learning model of an adaptive vehicle access system of the kind set forth above. An inference process for said model may contain the following steps. An upcoming week may be split into a time-grid having a granularity of 15 minutes. Thus, each week is divided into 672 time-bins (i.e., time slots). For each of these time-bins a probability of access should be a real number computed in the range [0, 1], which can be done by a machine learning model. Furthermore, in this example the probability is compared to different thresholds, resulting in one of three outcomes: low, medium, and high. Each of these outcomes corresponds to a level of activity of a detection unit included in the vehicle access system. For instance, a low probability corresponds to very infrequent BLE advertising, using only a very limited subset of external anchors of the vehicle (e.g., only one anchor on the driver's door handle or driver-side B-pillar). Furthermore, a medium probability corresponds to infrequent BLE advertising using only external anchors of the vehicle. Finally, a high probability corresponds to a normal, frequent BLE advertising using all anchors of the vehicle.

Some of the input parameters of the machine learning model are based on past data, which are processed once a week. In particular, one input parameter of this kind is the amount of accesses *a* over the last N weeks within each time-bin and neighbouring time-bins. The parameter *a* can be capped to a maximum amount so that it becomes easier to process, for example to a maximum amount of 5, meaning that if more than 5 accesses occurred in the past within that time-bin, the value of *a* is still only 5. The time-bin has thus a score *a* in [0, 5] indicating how frequently an access event has occurred in it. The parameter *a* is also affected by neighbouring time-bins to a smaller degree, as events in real life might happen slightly earlier or later than usual. For example, if the user starts to work at 08:00, they might take the vehicle to drive to work at 07:35. However, they might be late or early, depending on the day. Thus, a high-probability access event at the time-bin [07:30, 07:45] also affects the preceding time-bin and the succeeding time-bin (or maybe even more preceding and succeeding time-bins). Another input parameter of this kind may be a calendar event scheduled within the same time-bin, normalized to [0, 1], where a higher value indicates a higher probability of an access event. For instance, 0.0 means no event (e.g., in the night), 0.5 means an event, but no further information is known, and 1.0 means an event with a GNSS location explicitly marked as differing more than 100 meters from where the vehicle is currently parked. A more complex weighting algorithm might try to apply a value in the range [0, 1], which is also based on the semantics of the calendar event, e.g., trying to infer meaning from "business trip" or "sick leave". Finally, another input parameter of this kind is data indicative of which anchors were used for the first connection of the user (e.g., approaching always from the same side, especially based on GNSS location).

Other input parameters of the machine learning model are based on data, which are processed sporadically, for example in response to trigger events. In particular, one input parameter of this kind is a calendar entry which has been created, updated, or deleted. The probability of the corresponding time-bin and neighboring time-bins is updated in accordance with a change of such an entry. Another input parameter of this kind is data indicative of whether or not the vehicle is parked, based on its GNSS position. The probability of the current and near-future time-bins is updated based on a geofence around this position. Furthermore, when parked away from common geofences (e.g., home, work), the probability of access is increased, because the schedule might be unpredictable. Furthermore, when parked near, for example, airports and bus stops, the probability of access is reduced.

In addition, a user preference override may be applied to explicitly change the level of activity of the detection unit during specific time-bins. For instance, the user may set the detection unit to a high level of activity when the vehicle is parked at home (which is an area formed by a geofence) during the morning time-bins before going to work. Furthermore, the user may set the detection unit to a low level of activity when the geofence indicates that the vehicle is parked at an airport. It is noted that the user's preferences may, in a practical implementation, simply modify the precomputed probability values of the time-bins, for example by overwriting these values with the values "high" or "low".

Since in the above-described example the computation is based on past data that are processed once a week, there is no need to continuously run the entire model. Furthermore, since the events triggering a change in the model are rare (e.g., driving the car, updating the calendar) compared to the amount of time-bins which are affected by them, the updates happen infrequently and only affect the pre-computed model result, correcting it on the fly. In addition, the computation of the entire machine learning model might be done on the access device, e.g. on a smart phone (having access to the calendar too), such that only the output would be downloaded onto the vehicle access system to save the vehicle's available power. In other words, the weekly run generates an array of 672 probabilities given 15-minute time slots (e.g., uint8 values), which is stored. Then, triggering events apply a change to that array in-place. Finally, the array of the previous week is fed forward into the prediction for next week. For these reasons, the computation energy requirements may be kept at an acceptable level.

The following learning procedure may be applied in the above-described example. A supervised learning approach may be utilized to generate the expected probability of use in each of the 672 time-bins. The initial setup of the model may be based on user input for expected entry and exit times of the vehicle and on existing calendar events. Based on this initial information, the probabilities may be generated for all 672 time-bins. If this information is not provided, then the model outputs may be based on best assumptions given by the original equipment manufacturer (OEM). These assumptions may be based on previously collected data from other users, or the current user could be matched to a user profile defined by the OEM. Alternatively, the model may be a non-optimized model waiting to first collect enough usage patterns data from the user over the course of the first few weeks of usage of the vehicle. Each week the machine learning model (e.g., a neural network) may be retrained using the newly acquired information such as access events, anchor usage, vehicle position and potentially inputs from the calendar and any overrides inputted by the vehicle user. This retraining may be performed either on the access device, on the vehicle itself or in the cloud. The requirements for retraining the model on the vehicle would depend on the current remaining battery level and on whether the user has set a preference when the retraining should be performed (e.g., when the vehicle is charging). If the retraining is performed on the access device, then the outputs (low, medium, or high) for each of the 672 time-bins may be transferred over to the vehicle either when the access device is in close proximity of the vehicle or via GSM. If the retraining is performed in the cloud, then the data may be periodically transferred to the cloud. Furthermore, in that case, the retraining may be performed more frequently, in order to optimize the model performance. Finally, the model training and retraining may be performed using the backpropagation algorithm. As time progresses, more data would be available for retraining the supervised learning model, which would benefit from the ground truth data collected over the previous weeks. Therefore, over time the model performance may increase and the user experience may continuously be improved.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: vehicle access system
- 102: detection unit
- 104: controller
- 200: method of operating a vehicle access system
- 202: detecting, by a detection unit included in a vehicle access system, whether at least one external access device is present within a predefined area around a vehicle
- 204: controlling, by a controller included in the vehicle access system, a level of activity of the detection unit in dependence on a predetermined probability that the vehicle will be accessed within predefined time slots
- 300: process for determining a probability of access of a vehicle
- 302: usage patterns
- 304: calendar events
- 306: GNSS location
- 308: usage model
- 310: personal setting override
- 312: learning and adapting the usage model
- 400: graph showing a probability of access versus time
- 402: probability of access during Monday
- 404: time
- 406: activation threshold
- 408: time-window of access in low-power (advertising rarely)
- 410: time-window of access in high-power (advertising often)

## Claims

1. A vehicle access system for use in a vehicle, comprising:
a detection unit configured to detect whether at least one external access device is present within a predefined area around the vehicle;
a controller operatively coupled to the detection unit, wherein the controller is configured to control a level of activity of the detection unit in dependence on a predetermined probability that the vehicle will be accessed within predefined time slots.

2. The vehicle access system of claim 1, wherein controlling the level of activity of the detection unit includes, if said predetermined probability is below a predefined threshold, causing the detection unit to enter into a low-power operating state or deactivating at least a part of the detection unit.

3. The vehicle access system of claim 2, wherein the detection unit comprises at least one communication node, and wherein causing the detection unit to enter into a low-power operating state comprises reducing a scanning frequency of the communication node, an advertising frequency of the communication node, or a ranging frequency of the communication node.

4. The vehicle access system of claim 2 or 3, wherein the detection unit comprises a plurality of communication nodes, and wherein deactivating at least a part of the detection unit comprises deactivating a subset of said communication nodes.

5. The vehicle access system of claim 3 or 4, wherein the communication nodes include at least one of the group of: Bluetooth low energy, BLE, communication nodes; ultra-wideband, UWB, communication nodes; near field communication, NFC, communication nodes.

6. The vehicle access system of any preceding claim, wherein the controller is configured to predetermine the probability by executing an algorithm that takes one or more of the following parameters as input: a pattern of use of the vehicle; a current date and time; a geographical location of the vehicle; a calendar of one or more users of the vehicle; a configurable setting stored in the vehicle or in the access device; a location of the access device; a movement pattern of one or more users of the vehicle.

7. The vehicle access system of claim 6, wherein the algorithm is a machine learning algorithm.

8. The vehicle access system of claim 7, wherein the machine learning algorithm is based on a Bayesian network, a Gaussian mixture model, a hidden Markov model, a recurrent neural network, or a temporal convolutional network.

9. The vehicle access system of any preceding claim, wherein the controller is further configured to be prevented, by an override function initiated by a user, from controlling the level of activity.

10. The vehicle access system of any preceding claim, wherein the access device is a mobile device carried by a user of the vehicle.

11. A vehicle comprising the vehicle access system of any preceding claim.

12. A method of operating a vehicle access system for use in a vehicle, the method comprising:
detecting, by a detection unit included in the vehicle access system, whether at least one external access device is present within a predefined area around the vehicle;
controlling, by a controller included in the vehicle access system, a level of activity of the detection unit in dependence on a predetermined probability that the vehicle will be accessed within predefined time slots.

13. The method of claim 12, wherein controlling the level of activity of the detection unit includes, if said predetermined probability is below a predefined threshold, causing the detection unit to enter into a low-power operating state or deactivating at least a part of the detection unit.

14. A computer program comprising executable instructions which, when executed by the vehicle access system of any one of claims 1 to 10, cause said vehicle access system to carry out the method of claim 12 or 13.

## Amended claims

### Amended claims in accordance with Rule 137(2) EPC.

1. A vehicle access system (100) for use in a vehicle, comprising:
a detection unit (102) configured to detect whether at least one external access device is present within a predefined area around the vehicle;
a controller (104) operatively coupled to the detection unit (102), wherein the controller (104) is configured to control a level of activity of the detection unit (102) in dependence on a predetermined probability that the vehicle will be accessed within predefined time slots;
**characterized in that** controlling the level of activity of the detection unit (102) includes, if said predetermined probability is below a predefined threshold, causing the detection unit (102) to enter into a low-power operating state or deactivating at least a part of the detection unit (102); and
wherein the detection unit (102) comprises at least one communication node, and wherein causing the detection unit (102) to enter into a low-power operating state comprises reducing a scanning frequency of the communication node, an advertising frequency of the communication node, or a ranging frequency of the communication node;
or wherein the detection unit (102) comprises a plurality of communication nodes, and wherein deactivating at least a part of the detection unit (102) comprises deactivating a subset of said communication nodes.

2. The vehicle access system (100) of claim 1, wherein the communication nodes include at least one of the group of: Bluetooth low energy, BLE, communication nodes; ultra-wideband, UWB, communication nodes; near field communication, NFC, communication nodes.

3. The vehicle access system (100) of any preceding claim, wherein the controller (104) is configured to predetermine the probability by executing an algorithm that takes one or more of the following parameters as input: a pattern of use of the vehicle; a current date and time; a geographical location of the vehicle; a calendar of one or more users of the vehicle; a configurable setting stored in the vehicle or in the access device; a location of the access device; a movement pattern of one or more users of the vehicle.

4. The vehicle access system (100) of claim 3, wherein the algorithm is a machine learning algorithm.

5. The vehicle access system (100) of claim 4, wherein the machine learning algorithm is based on a Bayesian network, a Gaussian mixture model, a hidden Markov model, a recurrent neural network, or a temporal convolutional network.

6. The vehicle access system (100) of any preceding claim, wherein the controller (104) is further configured to be prevented, by an override function initiated by a user, from controlling the level of activity.

7. The vehicle access system (100) of any preceding claim, wherein the access device is a mobile device carried by a user of the vehicle.

8. A vehicle comprising the vehicle access system (100) of any preceding claim.

9. A method (200) of operating a vehicle access system for use in a vehicle, the method comprising:
detecting (202), by a detection unit included in the vehicle access system, whether at least one external access device is present within a predefined area around the vehicle;
controlling (204), by a controller included in the vehicle access system, a level of activity of the detection unit in dependence on a predetermined probability that the vehicle will be accessed within predefined time slots;
**characterized in that** controlling (204) the level of activity of the detection unit includes, if said predetermined probability is below a predefined threshold, causing the detection unit to enter into a low-power operating state or deactivating at least a part of the detection unit; and
wherein the detection unit comprises at least one communication node, and wherein causing the detection unit to enter into a low-power operating state comprises reducing a scanning frequency of the communication node, an advertising frequency of the communication node, or a ranging frequency of the communication node;
or wherein the detection unit (102) comprises a plurality of communication nodes, and wherein deactivating at least a part of the detection unit (102) comprises deactivating a subset of said communication nodes.

10. A computer program comprising executable instructions which, when executed by the vehicle access system of any one of claims 1 to 8, cause said vehicle access system to carry out the method of claim 9.
